## Europäisches Patentamt
## European Patent Office
## Office européen des brevets

(11) Publication number: **0 121 057**
**B1**

(12) **EUROPEAN PATENT SPECIFICATION**

(45) Date of publication of patent specification: **13.06.90**

(51) Int. Cl.⁵: **G 11 B 5/54**

(21) Application number: **84101276.8**

(22) Date of filing: **08.02.84**

(54) Transducer suspension.

(30) Priority: **30.03.83 US 480997**

(43) Date of publication of application:
**10.10.84 Bulletin 84/41**

(45) Publication of the grant of the patent:
**13.06.90 Bulletin 90/24**

(84) Designated Contracting States:
**DE FR GB**

(56) References cited:
EP-A-74 01            GB-A-2 000 893
DE-A-2 920 599        GB-A-2 022 307

IBM Technical Disclosure Bulletin, vol.21, no. 8,
January 1979 RE NORWOOD "Damped head
arm"

IBM Technical Disclosure Bulletin, vol. 11, no. 3,
August 1968 RR RYNDERS ET AL: "Damped
slider mount"

(73) Proprietor: **International Business Machines Corporation**
**Old Orchard Road**
**Armonk, N.Y. 10504 (US)**

(72) Inventor: **Pal, George Stephen**
**19731 Three Oaks Way**
**Saratoga California 95070 (US)**
Inventor: **Snyder, Charles George**
**5487 Drysdale Drive**
**San Jose California 95124 (US)**

(74) Representative: **Harris, Ian Richard et al**
**IBM United Kingdom Limited Intellectual**
**Property Department Hursley Park**
**Winchester, Hants. SO21 2JN (GB)**

(56) References cited:
Harker et al, "A Quarter Century of Disk File
Innovation" published at pages 677 to 689 of
IBM Journal of Research and Development (25th
Anniversary Issue), vol 25, no 5, September 1981
Bolasna et al, "Air-Bearing Support of a
Magnetic Recording Head", published at pages
12 to 15 of IBM Disk Storage Technology
published by IBM, General Products Division,
5600 Cottle Road, San Jose, Calif., USA Order
Number GA 26-1665-0

Courier Press, Leamington Spa, England.

### Description

This invention relates to a transducer suspension assembly for supporting a magnetic transducer head in disk files.

One of the most common forms of information storage apparatus is the magnetic disk file in which information is written on and reproduced from the surface of a rotating storage disk by means of a transducing head. The use of a head arm assembly for supporting and positioning a magnetic head to access data from a track on a selected disk of the storage system is well known in the prior art. It is common to support the transducing head very close to the disk by means of an air bearing created by the motion of the disk. To access information on different areas of the disk, it is also well known to provide linear or rotary positioning apparatus to move the heads over the disk surface to different radial positions. The head support arm assemblies are mounted on the positioning apparatus in cantilever fashion, and the heads are mounted on the support arms by means of compliant suspensions which allow limited motion of the heads to accommodate irregularities in the disk surface or variations in the air bearing.

Vibration or resonance of the support arms can have a deleterious effect on the performance of the information storage apparatus. The introduction of damping to limit vibration in order to prevent the head from striking the disk is discussed in an article entitled "Damped Slider Mount" by R. R. Rynders et al (IBM Technical Disclosure Bulletin, Volume 11, No. 3, August 1968, page 248). A magnetic head, which is fixed rather than movable over a disk, is mounted on the tip of a cantilever support arm which is a sandwich structure of two metal members and a constrained elastomeric damping layer.

In the case of a movable head, it is well known to employ a closed loop servo system to control the positioning apparatus to position the head accurately over a desired concentric track of recorded information on the disk. Vibration of the head support arm can cause the head to move off track and introduce an error signal into the servo system which is modulated at the vibration frequency. Also, the resonant frequency of the head support arm is such as to cause instability of the servo system. Another effect of resonance of a head support arm is the degradation of the signal from the transducing head by modulation of the transduced signal. In the publication entitled "Damped Head Arm" by R. E. Norwood (IBM Technical Disclosure Bulletin, Volume 21, Number 8, January 1979, page 3093), the head arm is constructed of two layers of metal with a viscous damping material sandwiched between the metal layers of the head arm to overcome both these problems in a flexible disk file.

Although the need for effective damping of magnetic head support apparatus has been recognised in the prior art, the various solutions have had a major impact on the structural design of the head support apparatus. In spite of those proposals, none of the methods of damping has been effective in reducing all modes of vibration to an acceptable level.

This invention seeks to provide an arrangement which is effective to substantially reduce the level of all modes of vibration while minimising the impact on the overall design of the magnetic head support apparatus.

A transducer suspension assembly for a disk file of the type in which a transducer head is loaded against an air bearing between the transducer head and a disk surface, is described in EP—A—7 401. The assembly includes an elongate load beam for supporting the transducer head at an outboard end thereof, and means at the inboard end of the load beam for securing the load beam to a transducer support arm the load beam being formed from a spring member having a flat surface area spaced from said outboard end and being adapted over a part of its length to provide sufficient stiffness to load the transducer head towards the disc surface. EP-A-60358 discloses an arrangement of this type in which damping material is applied to the rigid arm assembly to damp resonance therein. A transducer support assembly of this type in accordance with the present invention is characterised by a layer of viscoelastic material located on at least a portion of said flat surface area and sandwiched between the load beam and a constraining member so that the amplitude of vibrations is reduced due to absorption of shear energy in the layer of viscoelastic material.

By use of the damping structure on the elongated flat area of the load beam, the damping structure is operable to reduce significantly vibration along the data tracks or tangential mode vibration, torsional mode vibration which produces off-track areas, as well as bending mode vibration which affects the flying height of the transducing head.

The preferred damping material is a viscoelastic damping polymer provided in the form of a pressure sensitive adhesive tape.

How the invention can be carried out will now be described by way of example, with reference to the accompanying drawings, in which:

FIG. 1 is a perspective view of a magnetic head arm assembly;

FIG. 2 is a top plan view of a magnetic head suspension embodying the invention;

FIG. 3 is a longitudinal section along line 3—3 of FIG. 2;

FIG. 4 is a bottom plan view of a magnetic head suspension embodying the present invention;

FIG. 5 is a section on line 5—5 of FIG. 2;

FIG. 6 is a graph of vibration amplitude versus frequency for a magnetic head suspension without a damping arrangement according to the invention;

FIG. 7 is a graph of vibration amplitude versus frequency for the magnetic head suspension when modified by the inclusion of a damping arrangement in accordance with the embodiment of the invention shown in FIG. 2;

FIG. 8 is a bottom plan view of another magnetic head suspension embodying the present invention;

FIG. 9 is a longitudinal section on line 9—9 of FIG 8;

FIG. 10 is a section on line 10—10 of FIG. 8;

FIG. 11 is a section on line 11—11 of FIG. 8;

FIG. 12 is a top plan view of a further magnetic head suspension embodying the present invention;

FIG. 13 is a longitudinal section on line 13—13 of FIG. 12;

FIG. 14 is a section on line 14—14 of FIG. 12;

FIG. 15 is a graph of vibration amplitude vs. frequency for a magnetic head suspension;

FIG. 16 is a graph of vibration amplitude vs. frequency for the magnetic head suspension of FIG. 15 when modified in accordance with the embodiment of the present invention shown in FIG. 12;

FIG. 17 is a section of another magnetic head suspension embodying the present invention.

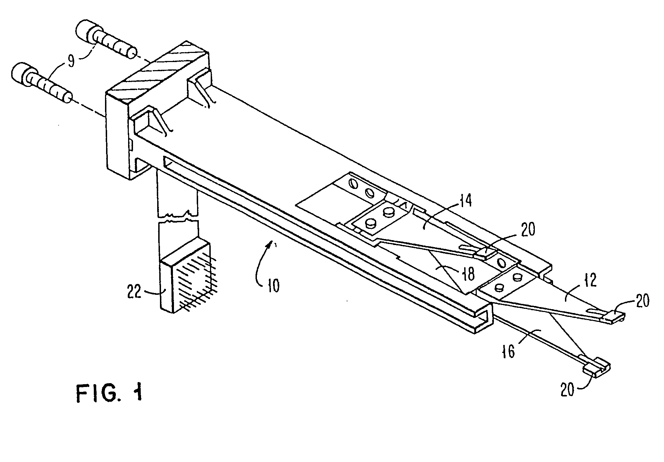

With reference to FIG. 1, magnetic head suspension assemblies 12 and 14 are attached to the top of a magnetic head arm 10, and magnetic head suspension assemblies 16 and 18 are attached to the bottom of the head arm 10. Each suspension assembly 12, 14, 16, 18 supports at its distal end a head slider 20, and each head slider 20 has one or more magnetic transducer means disposed so that the transducing gap may be in transducing relation with magnetic disk surfaces. Electrical signals are conducted from the heads to a plug connector assembly 22 for use by a host system. Head arm 10 is attached by threaded screws 9, for example to suitable positioning means as is known in the art.

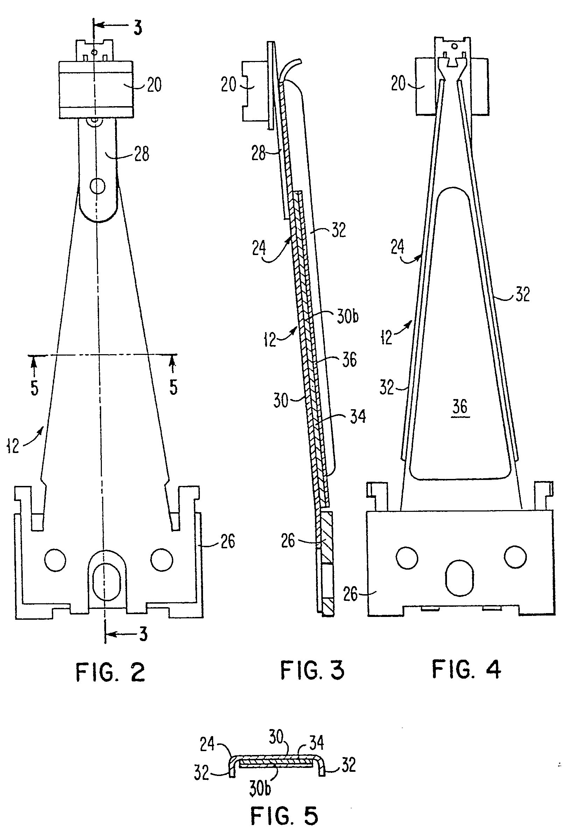

The structure of each of the suspension assemblies 12, 14, 16, 18 is the same. The structure of suspension assembly 12 is shown in FIGS. 2 to 5 and this assembly comprises a load beam 24, a mounting block 26 and a flexure 28 to support head slider 20. The load beam 24 comprises a spring member having a tapered elongate flat section 30 having upturned edges to produce flanges 32 over part of its length to provide sufficient stiffness to load the magnetic head toward the disk surface. An air bearing force supplied by the air flow adjacent to the disk surface provides an opposing aerodynamic force or pressure to develop a spacing between the head and the disk, or a flying height for the head, which may be about 0.5 microns (20 microinches), by way of example. In this manner, a noncontact transducing relationship between the transducing gap of the magnetic heads and the data tracks of the magnetic disk is established.

Although the head arm assembly constructed as so far described achieves a desired head loading relative to a record surface, resonant frequencies are associated with the components of the assembly due to their design. Vibrations at one or more of these resonant frequencies tend to vary significantly the desired head-to-disk spacing, thereby degrading the read-write process.

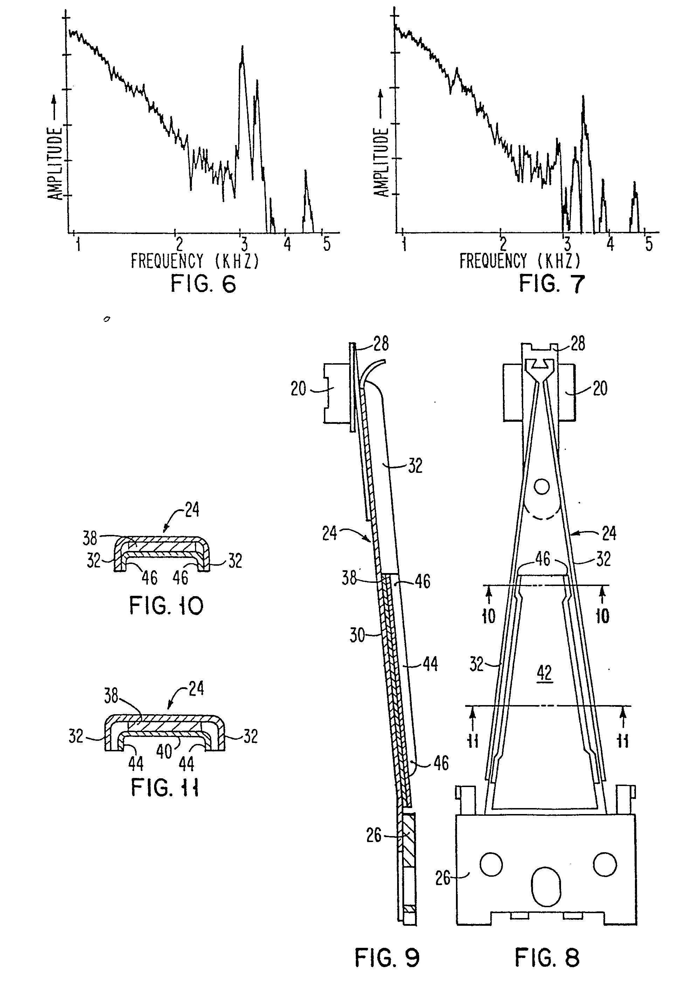

FIG. 6 is a graphical representation of the typical amplitude of vibration at different frequencies for a specific suspension.

In accordance with the present invention, one side of a layer (34) of damping material is positioned in intimate contact with an inboard surface area 30b of the flat section of the load beam. A constraining member is fixed in intimate contact with the other side of the damping layer. This structure significantly reduces the vibration by shear energy absorption in the damping material. The structure is operable to reduce tangential mode vibrations (along the data track), torsional mode vibration, and bending mode vibration.

In the specific embodiment shown in FIGS. 2 to 5, the damping layer 34 substantially covers the surface area 30b of the tapered elongate flat section 30. Surface area 30b is on the side of section 30 away from the disk surface which is in transducing relation with the attached head slider 20. A constraining member 36 is fixed in intimate contact with the outer surface of damping layer 34 so that damping layer 34 is constrained between load beam 24 and constraining member 36.

The addition of the layer 34 and member 36 to the magnetic head suspension reduces the vibration level by shear energy absorption in the damping layer 34. The suspension whose vibration characteristics were shown in FIG. 6 was modified by adding the damping layer 34 and the constraining member 36 as described above. The level of vibrations for the modified suspension is shown in FIG. 7. Note that the damping was very effective between the 3.0 to 3.5 KHz frequency range in which the vibration level as shown in FIG. 6 exceeded the allowable vibration limits for a particular application. The level of vibration for the suspension modified in accordance with the present invention (FIG. 7) was well within the specifications for that particular application.

The damping layer 34 may comprise any suitable viscoelastic material, and the damping layer 34 may be held in intimate contact with the inboard surface area 30b and constraining member 36 by any suitable means such as adhesives or mechanical means. One suitable material for damping layer 34 is a modified acrylic polymer material, and such a material is produced in the convenient form of a double-sided tape by the 3M Company, St. Paul, MN., USA under their designation ISD 110. The damping layer 34 and constraining member 36 are cut to the proper shape and are stuck in position on surface 30b, as shown in FIG. 5, by the pressure sensitive nature of the tape. The load beam may then be heated to a temperature sufficient to make the viscoelastic material tacky so that the three components are more effectively bonded together, but not to a temperature which would destroy the viscoelastic properties of the polymer material. One suitable treatment comprises applying a pressure of from $1.03 \times 10^5$ to $1.38 \times 10^5$ pascals (15 to 30 psi) within the range of 93 to 149°C (200—300°F) for about 45 seconds.

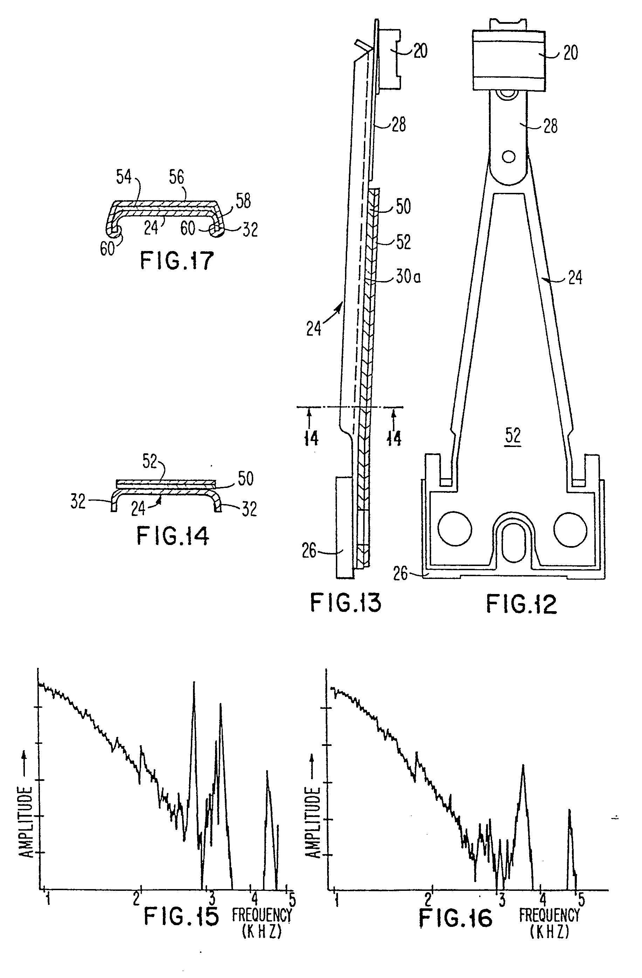

An alternative embodiment of the invention is shown in FIG. 8 in which a damping layer 38 is held in intimate contact with the inboard surface area 30b by a modified constraining member 40. The constraining member 40 has a flat section 42, which is coextensive with surface area 30b, and upturned edges to form flanges 44. As shown in FIG. 11, the flanges 32 and 44 are formed so that a space is provided between flanges 32 and 44. However a tab 46 (FIG. 10) is provided at the end of each of the flanges 44 which is bent outwards to extend to flanges 32. While in this position, the tabs 46 are fixed, by welding, for example, to the flanges 32 so that the damping layer 38 is held in intimate contact between load beam 24 and constraining member 40. Test data shows that this embodiment is also effective to substantially reduce the vibration amplitude over the frequency range shown in FIGS. 6 and 7.

The addition of the damping layer and the constraining member to the suspension does not alter the fundamental design of the suspension, but these components are effective to substantially reduce the tangential mode vibration, the torsional mode vibration as well as the bending mode vibration.

The embodiments shown in FIGS. 2 to 5 and 8 to 10 are preferred since the damping layer is within the flanges 32 of the load beam and for that reason does not take up space in the suspension to disk area. However, the damping is equally effective when the damping layer and constraining member are fixed to the surface of the load beam which faces the disk surface which is in transducing relation with the attached head slider 20.

The embodiment shown in FIGS. 12 and 13 comprises a damping layer 50 in intimate contact with the surface area 30 of the load beam 24. A constraining member 52 is positioned in contact with the damping layer 50 so that vibrations are damped by shear energy absorption in damping layer 50 due to differential movements of load beam 24 and constraining member 52 due to the vibrations. FIGS. 15 (before) and 16 (after) show the effect produced on the vibration amplitude by the addition of the damping layer 50 and the constraining member 52 to the magnetic head suspension.

The damping layer and the constraining member may be fixed in position by suitable adhesives or by mechanical means. The embodiment shown in FIGS. 12 to 14 can be formed by the use of a pressure sensitive tape and selective heating as was previously described with respect to the embodiment shown in FIGS. 2 to 5.

The damping structure can also be fixed in place by mechanical means. One suitable embodiment is shown in FIG. 17. In this embodiment, the constraining member 56 has turned edges to produce flanges 58 which mate with flanges 32 of load beam 24. A plurality of spaced tabs are produced on flanges 58 so that the tabs 60 can be bent inwards around flanges 32 to fix damping element 54 and constraining member 56 in place. Alternatively damping element 54 may extend to the edges of the flanges 58 and either flanges 58 or both flanges 58 and 32 may be rolled over to fix the damping element in position. These embodiments also substantially reduce the vibration amplitude over the frequency range of interest.

In a specific embodiment which gave damping improvement similar to that shown in FIGS. 7 and 16, the load beam 24 was made of stainless steel 78 microns (3 mils thick), the viscoelastic damping material was 125 microns (5 mils) thick, and the constraining member 36 was made of stainless steel 50 microns (2 mils) thick.

**Claims**

1. A transducer suspension assembly for a disk file of the type in which a transducer head (20) is loaded against an air bearing between the transducer head and a disk surface, the assembly including an elongate load beam (24) for supporting the transducer head (20) at an outboard end thereof, and means (26) at the inboard end of the load beam for securing the load beam to a transducer support arm (10), the load beam (24) being formed from a spring member having a flat surface area (30) spaced from said outboard end and being adapted over a part of its length to provide sufficient stiffness to load the transducer head (20) towards the disk surface, the assembly being characterised by a layer (34) of viscoelastic material located on at least a portion of said flat surface area and sandwiched between the load beam and a constraining member (36) so that the amplitude of vibration is reduced due to absorption of shear energy in the layer of viscoelastic material.

2. An assembly as claimed in claim 1, in which the adaptation of the load beam comprises flanges (32) on one side thereof and in which the layer (34) of viscoelastic material is located on said one side of the load beam between the flanges.

3. An assembly as claimed in claim 1, in which the adaptation of the load beam comprises flanges on one side thereof and in which the layer (50, Fig. 13) of viscoelastic material is located on the other side of the load beam.

4. An assembly as claimed in any preceding claim, in which the layer of viscoelastic material consists of a strip of pressure-sensitive adhesive tape.

5. An assembly as claimed in claim 4, in which the adhesive tape is formed from a modified acrylic polymer.

6. As assembly as claimed in any preceding claim, in which both the load beam (24) and the constraining member (36) are formed from stainless steel.

7. As assembly as claimed in any preceding claim, in which the load beam is 75 microns thick, the layer of viscoelastic material is 125 microns thick and the constraining member is 50 microns thick.

**Patentansprüche**

1. Meßwandleraufhängungsmontage für einen Plattenstapel vom Typ, in dem ein Meßwandlerkopf (20) gegen ein Luftlager zwischen dem Meßwandlerkopf und einer Plattenfläche geladen wird, wobei die Montage einen länglichen Ladebaum (24) enthält, um den Meßwandlerkopf (20) an seinem äußeren Ende aufzunehmen, und Mittel (26) am inneren Ende des Ladebaums, um den Ladebaum an einem Meßwandlerträgerarm (10) festzuhalten, wobei der Ladebaum (24) durch ein Federglied gebildet wird, das eine Zone mit flacher Oberfläche (30) aufweist, welche vom besagten äußeren Ende ferngehalten wird und über ein Teil ihrer Länge so gestaltet ist, daß sie ausreichende Steifigkeit besitzt, um den Meßwandlerkopf (20) zur plattenfläche zu laden, wobei die Montage durch eine Schicht (34) viskoelastischen Materials gekennzeichnet ist, das sich auf mindestens einem Abschnitt der besagten flachen Zone befindet, und zwischen dem Ladebaum und einem Halteglied (36) eingeschlossen ist, so daß die Amplitude der Schwingungen reduziert wird, um Scherkräfte in der Schicht des viskoelastischen Materials aufzunehmen.

2. Montage gemäß Anspruch 1, in der die Anpassung des Ladebaums Flansche (32) auf einer Seite enthält und in der die Schicht (34) viskoelastischen Materials auf der besagten einen Seite des Ladebaums zwischen den Flanschen angebracht ist.

3. Montage gemäß Anspruch 1, in der die Anpassung des Ladebaums Flansche an seinen Seiten aufweist und in der die Schicht (50, Abb. 13) viskoelastischen Materials auf der anderen Seite des Ladebaums angeordnet ist.

4. Montage gemäß einem der vorangehenden Ansprüche, in der die Schicht viskoelastischen Materials einen druckempfindlichen Klebstreifen enthält.

5. Montage gemäß Anspruch 4, in der der Klebstreifen aus einem modifizierten Acrylpolymer gebildet wird.

6. Montage gemäß einem der vorangehenden Ansprüche, in der sowohl der Ladebaum (24) als auch das Halteglied (36) aus rostfreiem Stahl geformt sind.

7. Montage gemäß einem der vorangehenden Ansprüche, in der der Ladebaum 75 µ dick ist, während die Schicht viskoelastischen Materials 125 µ und das Halteglied 50 µ dick ist.

**Revendications**

1. Un bloc de suspension de transducteur pour mémoire à disque du type dans lequel une tête de transducteur (20) est sollicitée contre un coussin d'air formé entre la tête de transducteur et une surface de disque, le bloc comprenant un fléau de charge allongé (24) destiné à supporter la tête de transducteur (20) à une extrémité externe de celui-ci, et des moyens (26), situés à l'extrémité interne du fléau de charge, pour solidariser le fléau de charge à un bras support de transducteur (10), le fléau de charge (24) étant réalisé à partir d'un élément élastique comprenant une région de surface plane (30) située à distance de ladite extrémité externe, et étant adapté sur une partie de sa longueur de manière à offrir une raideur suffisante pour solliciter la tête de transducteur (20) en direction de la surface de disque, le bloc étant caractérisé par une couche (34) de matériau viscoélastique située sur au moins une partie de ladite région de surface plane et prise en sandwich entre le fléau de charge et un élément raidisseur (36), de manière à réduire l'amplitude des vibrations par absorption de l'énergie de cisaillement dans la couche de matériau viscoélastique.

2. Le bloc de la revendication 1, dans lequel l'adaptation du fléau de charge comprend des rebords (32) formés sur l'une des faces de celui-ci, et dans lequel la couche (34) de matériau viscoélastique est située sur cette même face du fléau de charge, entre les rebords.

3. Le bloc de la revendication 1, dans lequel l'adaptation du fléau de charge comprend des rebords (32) formés sur l'une des faces de celui-ci, et dans lequel la couche (50, figure 13) de matériau viscoélastique est située sur l'autre face du fléau de charge.

4. Le bloc de l'une des revendications précédentes, dans lequel la couche de matériau viscoélastique consiste en une bande de ruban adhésif sensible à la pression.

5. Le bloc de la revendication 4, dans lequel le ruban adhésif est réalisé à partir d'un polymère acrylique modifié.

6. Le bloc de l'une des revendications précédentes, dans lequel le fléau de charge (24) et l'élément raidisseur (36) sont tous deux réalisés en d'acier inoxydable.

7. Le bloc de l'une des revendications précédentes, dans lequel le fléau de charge a une épaisseur de 75 µm, la couche de matériau viscoélastique a une épaisseur de 125 µm et l'élément raidisseur a une épaisseur de 50 µm.

FIG. 1

FIG. 2

FIG. 3

FIG. 4

FIG. 5

FIG. 6

FIG. 7

FIG. 10

FIG. 11

FIG. 9

FIG. 8

FIG.17

FIG.14

FIG.13

FIG.12

FIG.15

FIG.16